# EUROPÄISCHE PATENTSCHRIFT

(11) **EP 2 159 881 B1**
(45) Veröffentlichungstag und Bekanntmachung des Hinweises auf die Patenterteilung: **24.07.2013**
(21) Anmeldenummer: 09010772.3
(22) Anmeldetag: 21.08.2009
(51) Int. Cl.: H01R 4/30

(54) **Abreißschraube für Verbindungselemente von elektrischen Leitern**
Twist-off screw for connection elements of electric conductors
Vis de rupture pour éléments de connexion de conducteurs électriques

(30) Priorität: 25.08.2008 DE 102008039431
(43) Veröffentlichungstag der Anmeldung: 03.03.2010
(73) Patentinhaber: CELLPACK GMBH, D-79761 Waldshut-Tiengen (DE)
(72) Erfinder: Bentkowski, Kai-Uwe, 12279 Berlin (DE)
(74) Vertreter: Grüneberg, Marcus

(56) Entgegenhaltungen:
- EP-A- 0 692 643
- EP-A- 1 376 764
- EP-A- 1 833 117
- WO-A-02/18803
- FR-A- 2 431 063
- GB-A- 2 295 871

## Beschreibung

Die Erfindung betrifft eine Abreißschraube für Verbindungselemente von elektrischen Leitern, beispielsweise Klemmkörper oder Klemmverbinder, mit zumindest zwei sich in Richtung der Längsachse der Abreißschraube sich erstreckenden zylinderartigen Abschnitten, die durch einen Sollbruchabschnitt voneinander abgegrenzt sind.

Auf dem Markt erhältliche Verbindungselemente werden in Form von rohrförmigen Metallhülsen als Pressverbinder gefertigt. Diese Metallhülsen weisen an ihren beiden Stirnseiten jeweils eine Öffnung auf, in welche die zu verbindenden Enden der elektrischen Leiter eingeführt werden. Bei diesen Pressverbindern werden die mechanische Befestigung und die dauerhaft stromtragfähige elektrische Kontaktierung durch eine Verpressung der Metallhülse mit den Leiterenden erreicht. Für eine beispielsweise sechskantförmige Verpressung sind dazu spezielle Presswerkzeuge notwendig. Ein solcher Pressverbinder ist in der Regel nur für einen Leiterquerschnitt bzw. Leiterdurchmesser geeignet. Folglich muss auch das entsprechende Presswerkzeug mit Hilfe von speziellen wechselbaren Presselementen, beispielsweise Pressbacken, an die Größe des jeweiligen Pressverbinders angepasst werden.

Um die Nachteile, beispielsweise für die aufwändige Umrüstung der Presswerkzeuge, zu überwinden, werden zunehmend auch so genannte Schraubverbinder eingesetzt. Diese Schraubverbinder weisen mehrere sich radial erstreckende Gewindebohrungen zur Aufnahme von Schrauben auf, mittels denen die Leiterenden gegen die den Schrauben gegenüberliegende Seite der Innenoberfläche des Schraubverbinders gepresst werden. Durch Auswahl einer entsprechenden Schraubenlänge können zudem Leiter mit unterschiedlichem Querschnitt im Schraubverbinder arretiert werden, wodurch die Vielfalt der sonst notwendigen unterschiedlichen Größen der Schraubverbinder reduziert wird. Für die Befestigung der Leiterenden innerhalb der Schraubverbinder sowie für die dauerhaft stromtragfähige Kontaktierung muss mit Hilfe der Schrauben ein Mindestwert für den Anpressdruck zwischen Kabelleiter und Schraubverbinder - Innenoberfläche erzielt werden, der über das Drehmoment zur Befestigung der Schraube eingestellt werden kann. Um die Anwendung eines speziellen, das Drehmoment anzeigenden Werkzeuges, respektive ein Drehmomentschlüssel, zu vermeiden, können auch sogenannte Abreißschrauben eingesetzt werden, deren Kopfabschnitt beim Erreichen des erforderlichen Drehmomentes abreißt oder abschert. Damit ist der Wert des Drehmomentes nicht mehr von der Sorgfalt des Anwenders abhängig. Diese Abreißschrauben weisen hierbei zumindest eine Sollbruchstelle auf, die vorwiegend durch eine Verjüngung ihres Querschnitts, z. B. durch Materialschwächungen über der Umfangslinie, erreicht wird.

Wird die Abreißschraube derart gestaltet, dass beim kleinsten Leiterquerschnitt die Abreißstelle in der Ebene der Außenoberfläche des Schraubverbinders liegt, ergibt sich bei größeren Querschnitten folglich ein mit zunehmendem Leiterdurchmesser größer werdender Überstand der abgerissenen Schraube an der Außenseite des Schraubverbinders. Dies ist von großem Nachteil für die Gestaltung und die Montage der üblicherweise darüber zu montierenden Muffenisolierung. Bei allen vorbekannten Abreißschrauben erfolgt die Scherung im Metall der Schraube. Die Fertigung der Sollbruchstellen erfordert daher äußerste Präzision sowie ein besonders ausgewähltes Metall, um eine geringe Streuung des Abreiß-Drehmomentes zu erreichen. Würden sich die Streubereiche von zwei Sollbruchstellen außerhalb des Gewindebereiches der Hülse überlappen, könnte dies dazu führen, dass gegebenenfalls die "falsche" Sollbruchstelle bricht.

In der WO 96/31706 ist eine Abreißschraube mit mehreren Gewindeabschnitten und einem Kopfabschnitt beschrieben, wobei die Stellen zwischen den einzelnen Gewindeabschnitten Sollbruchstellen in Form von Einschnitten aufweisen. Aufgrund der Querschnittsgestaltung der Sollbruchstellen steigen die Abreißdrehmomente von der vom Kopfabschnitt entferntest liegende Sollbruchstelle hin zu der dem Kopf am nächsten liegenden Sollbruchstelle an. Nachteilig hierbei ist, dass kleine Leiterquerschnitte immer mit dem größten Drehmoment geklemmt werden, obwohl sie wegen des geringen zu führenden Stroms auch nur den geringsten Anpressdruck erfordern würden.

Aus der EP 0692643 ist eine Abreißschraube mit diskreten Sollbruchstellen in Form von Einschnitten in den Gewindeabschnitten des zylindrischen Schraubenkörpers vorbekannt. Diese Einschnitte können ein zum Kopfende hin auf- oder absteigendes Abreißmoment aufweisen oder gegebenenfalls gleich groß sein. Ausnehmungen im Inneren des Schraubenkörpers erlauben die Aufnahme unterschiedlicher Antriebswerkzeuge zum Aufbringen eines Drehmoments, wobei für die "Aktivierung" der einzelnen Sollbruchstellen jeweils der Einsatz einer anderen Größe des Antriebswerkzeugs notwendig ist. In einem aufwendigen Produktionsverfahren müssen zudem die beispielsweise sechskantförmigen Ausnehmungen in abgestuften Größen in den zylindrischen Körper eingebracht werden.

In der EP 0984176 ist eine Abreißschraube mit Sollbruchstellen offenbart, die ergänzend auch eine Stufen-Sollbruchstelle aufweist. Das Abreißmoment dieser Stufen-Sollbruchstelle ist dabei geringer als das der vom Kopfabschnitt weiter entfernteren Sollbruchstelle und größer als das der zum Kopfabschnitt hin näheren nächsten Sollbruchstelle. Die oberhalb und unterhalb der Stufen-Sollbruchstelle platzierten Sollbruchstellen müssen dabei jeweils durch ein anderes Antriebswerkzeug mit einem Drehmoment beaufschlagt werden. Auch hierbei ist es notwendig, die unterschiedlichen Angriffsflächen und Ausnehmungen für das Antriebswerkzeug entsprechend aufwändig zu fertigen. Zudem muss zwischen zwei Antriebsarten gewählt werden.

Die DE 102004039811 beschreibt eine Abreißschraube in Form eines einseitig geschlossenen Hohlzylinders mit einem zusätzlich eingeschraubten Schubelement. Zum Abriss wird die Tatsache ausgenutzt, dass das Gewinde der Schraube am Eingang in das Gewinde der Verbindungshülse mechanisch am höchsten beansprucht wird. Das Schubelement bewirkt in der Wandung des Hohlzylinders eine Zugspannung, welche die Wandung brechen lässt. Die Wandstärke des Hohlzylinders bestimmt das Drehmoment, das zum Abriss mit dem Schubelement aufgebracht werden muss. Der Hohlraum der Schraube ist nach dem Abriss durch Wegfall des Schubelements nach außen hin geöffnet. Für Muffenisolierungen ohne eine spezielle Abschirmung des Verbinders wird damit deren Isoliervermögen negativ beeinflusst.

Aus der WO 02/18803 A1 ist eine Abreißschraube für Verbindungselemente von elektrischen Leitern, beispielsweise Klemmkörper oder Klemmverbindungen, vorbekannt, welche zumindest zwei sich in Richtung der Längsachse der Abreißschraube sich erstreckende zylinderartige Abschnitte umfasst, die durch einen Sollbruchabschnitt voneinander abgegrenzt sind.

Die vorgenannten Erfindungen weisen darüber hinaus den entscheidenden Nachteil auf, dass für die Realisierung der Abreißfunktion immer geringe Materialstärken bzw. Materialschwächungen im Bereich der Sollbruchstellen erforderlich sind. Somit sind bei der Herstellung der Abreißschrauben nur geringe Fertigungstoleranzen zulässig. Die sich über der Umfangslinie erstreckenden Schwächungen im Schaft der Schraube werden zur Realisierung der Sollbruchstellen üblicherweise gefräst. Der dafür erforderliche Scheibenfräser weist naturgemäß eine bestimmte Wandstärke auf, die zu einem deutlichen Spalt im Gewinde der Schraube führt. Die so entstehenden separaten, axial voneinander beabstandeten Gewindebereiche können allerdings an den Kanten der Übergangsstellen leicht beschädigt werden, wodurch das Einschrauben in den dafür vorgesehenen Schraubverbinder erschwert wird. Darüber hinaus sind Abreißschrauben mit einem Abstand zwischen den Gewindeabschnitten, wie er bei Materialausnehmungen üblicherweise zustande kommt, dahingehend nachteilig, dass stets ein Teil des Schraubengewindes, welches in den Verbinder eingeschraubt ist, fehlt und somit nicht für eine Kraftübertragung zur Verfügung steht. Dies kann die Zuverlässigkeit der Schraubverbindung negativ beeinflussen.

Des Weiteren ist die Entstehung eines Metallgrates bei sämtlichen bekannten Lösungen als signifikanter Nachteil zu nennen. Der entstehende Metallgrat kann bei Mittelspannungsverbindungen zu kritischen Feldstärkeüberhöhungen führen und muss bei Montage stets sorgfältig und somit aufwändig entfernt oder mit Elektroden abgeschirmt werden.

Weiterhin ergibt sich bei einigen Abreißschrauben gemäß dem Stand der Technik das Problem, dass nicht nur ein Werkzeug für die Montage nötig ist, da die Abreißschraube über Angriffsflächen für verschiedene Werkzeuge - abhängig vom vorliegenden Kabelquerschnitt - verfügt, um Sollbruchstellen durch das Werkzeug zu überbrücken und damit zu verhindern, dass der Bruch an der "falschen" Stelle erfolgt. Dies setzt zum einen die Ausrüstung mit den entsprechenden Werkzeugen voraus. Zum anderen erhöht es auch das Fehlerpotenzial bei Montage und die Umrüstzeiten, da das Werkzeug korrekt ausgewählt werden muss und dabei verwechselt werden kann.

Die Aufgabe der Erfindung besteht nunmehr darin, eine Abreißschraube für Verbindungselemente von elektrischen Leitern, beispielsweise Klemmkörper oder Klemmverbinder gemäß dem Stand der Technik, vorzuschlagen, welche bei dauerhafter Sicherstellung ihrer elektrischen und mechanischen Aufgaben kostengünstig zu fertigen und leicht zu montieren sowie unabhängig von den zu verbindenden Leiterquerschnitten universell einsetzbar ist.

Nach der Konzeption der Erfindung umfasst die Abreißschraube für Verbindungselemente von elektrischen Leitern, beispielsweise Klemmkörper oder Klemmverbinder, zumindest zwei sich in Richtung der Längsachse der Abreißschraube sich erstreckende zylinderartige Abschnitte, die durch einen Sollbruchabschnitt voneinander abgegrenzt sind. Erfindungsgemäß sind die einzelnen Abschnitte an ihren Stirnflächen jeweils mittels einer Klebverbindung miteinander verbunden, wobei die Klebverbindung als der eine Scherebene bildende Sollbruchabschnitt der Abreißschraube ausgebildet ist.

Die Klebverbindung wird mittels eines Klebers oder eines Klebstoffgemischs realisiert, der oder das elastische Eigenschaften aufweist. Aufgrund des durch die Klebetechnik relativ einfach zu realisierenden dichten Kontakts der benachbarten zylinderartigen Abschnitte wird mit der erfindungsgemäßen Lösung eine raumgreifende Beabstandung der Gewindeabschnitte vermieden. Durch die Elastizität des Klebers oder des Klebstoffgemischs wird zudem gewährleistet, dass die Klebeebenen nicht ruckartig, sondern sanft abreißen, wenn das zulässige Drehmoment überschritten wird. Durch die erfindungsgemäße Ausbildung von durch Klebeverbindungen gebildeten Scherebenen können viele Gewindeabschnitte mit jeweils geringer Bauhöhe eingesetzt werden, womit das Scheren unmittelbar an der Verbinderoberseite jederzeit gewährleistet ist. Eine individuelle Nachbearbeitung durch einen Anwender ist, im Vergleich zum Stand der Technik, nicht mehr notwendig.

Es hat sich für die optimale Einstellung des Drehmoments besonders vorteilhaft erwiesen, wenn die verklebten Stirnflächen der Abschnitte zumindest partiell mit einer Antihaftbeschichtung versehen sind. Ebenso vorteilhaft für die Drehmomenteinstellung ist es, zwischen die verklebten Stirnflächen der Abschnitte eine die Stirnflächen zumindest partiell abdeckende Folie fertigungsseitig einzulegen, um so Einfluss auf das Drehmoment auszuüben.

Zumindest einer der Abschnitte der erfindungsgemäßen Abreißschraube umfasst ein Außengewinde, welches passfähig zu einem Innengewinde des Klemmkörpers oder Klemmverbinders ausgebildet ist. Einer der axialen Endabschnitte der Abreißschraube kann zudem als Kopfabschnitt ausgebildet sein, welcher Angriffsflächen für ein Antriebswerkzeug aufweist. Der Kopfabschnitt kann einerseits auf seiner Außenfläche Angriffsflächen für das Antriebswerkzeug umfassen oder andererseits zur Bildung von Innenflächen mit einer Ausnehmung gefertigt sein, die ihrerseits Angriffsflächen für das Antriebswerkzeug aufweist.

Erfindungsgemäß kann jedoch auf die Verwendung eines zusätzlichen Kopfabschnitts mit ausgebildeten Angriffsflächen für ein Antriebswerkzeug verzichtet werden, wenn anstelle des Kopfabschnitts zumindest einer der Gewindeabschnitte eine Angriffsfläche für das Antriebswerkzeug, beispielsweise in Form einer Sechskant-Ausnehmung, aufweist. Diese Lösung mit einer Sechskant-Ausnehmung eines Gewindeabschnitts ist beispielsweise dann vorteilhaft, wenn die Abreißschraube nebst Klemmkörper oder Klemmverbinder gemeinsam mit einem diesen umhüllenden Isoliersystem verwendet wird, in welchem aufgrund begrenzter Raumverhältnisse die Verwendung am Abreißschraubenkopf außen angreifender Antriebswerkzeuge unerwünscht oder gar unmöglich ist.

Durch die bei Verklebung nicht mehr auftretende raumgreifende Beabstandung der Gewindeabschnitte wird das Risiko einer Funktionsbeeinträchtigung durch Beschädigung des Gewindes an den Kanten der raumgreifenden Beabstandung beseitigt. Zudem stehen im Wesentlichen stets alle in den Klemmkörper oder Klemmverbinder eingetauchten Gewindegänge der einzelnen Abschnitte der Abreißschraube für die Kraftübertragung zur Verfügung, da die Schwächungen in Form von radialen Materialausnehmungen entfallen.

Ein weiterer wesentlicher Vorteil der Erfindung besteht darin, dass für die Herstellung der Sollbruchstellen keine nachträgliche mechanische Bearbeitung im Gewindeabschnitt durchzuführen ist und zur Einstellung der Abreißmomente somit keine strengen Fertigungstoleranzen aufgrund geringer Wandstärken einzuhalten sind.

Ebenso wird durch die Erfindung das Risiko ausgeschlossen, beim Abriss bzw. Abscheren des Kopfabschnitts oder eines Gewindeabschnitts einen Metallgrat an der Abrissstelle zu erzeugen. Die Gewindeabschnitte bzw. der Kopfabschnitt haben mechanisch geglättete Oberflächen und die nach dem Abriss verbleibenden Klebstoffreste auf der Scheroberfläche weisen eine geringe Schichtstärke auf und sind elektrisch nichtleitend. Eine mechanische Nachbearbeitung durch den Anwender entfällt somit, wodurch zusätzliches Fehlerpotenzial zuverlässig eliminiert wird.

Bei einer vorteilhaften Ausgestaltung der Erfindung nimmt das Abschermoment der einzelnen Sollbruchabschnitte bzw. Klebverbindungen ausgehend vom Kopfabschnitt bis hin zum gegenüberliegenden axialen Ende der Abreißschraube zu. Das Abschermoment kann jedoch ausgehend vom Kopfabschnitt bis hin zum gegenüberliegenden axialen Ende der Abreißschraube auch abnehmen oder konstant sein.

Die miteinander verklebten Stirnflächen der einzelnen Abschnitte weisen zum Zwecke einer optimalen Einstellung des Abreißdrehmoments eine kegelförmige Form, eine halbrunde Form oder aber eine zylindrische Tonnenform auf. Die Formgestaltung der Stirnflächen der einzelnen Abschnitte, d. h. Kopfabschnitt und/oder (Gewinde)abschnitte, unterliegt jedoch keinen Einschränkungen; entscheidend ist bei der Formgestaltung nur, dass mittels der Klebefläche eine optimale Drehmomenteinstellung gewährleistet werden kann.

Die Länge der einzelnen Abschnitte der erfindungsgemäßen Abreißschraube können einander entsprechen oder auch unterschiedlich sein. Dadurch, dass die Länge der miteinander verklebten Abschnitte beliebig gewählt werden kann, lässt sich eine entsprechende Anpassung der Sollbruchstellen an unterschiedliche Leiterquerschnitte erreichen, die der geltenden Normung entsprechend gestuft sind.

Im Bereich des den elektrischen Leiter kontaktierenden Endes der Abreißschraube ist, wie häufig üblich, vorzugsweise ein Endstück platziert, dessen eine Seite auf dem elektrischen Leiter aufsitzt und dessen gegenüberliegende Seite komplementär in den benachbarten Abschnitt der Abreißschraube eingreift. Dieses Endstück entlastet im Hinblick auf die Reibungsbelastung den Leiter im Bereich der Druckfläche und verhindert somit eine Beschädigung des Leiters und folglich eine Funktionsbeeinträchtigung des Verbindungssystems. Das Endstück kann eine beliebige Form aufweisen; es ist jedoch vorzugsweise tellerförmig und einseitig - an der auf dem elektrischen Leiter aufsitzenden Kontaktfläche - vorzugsweise konkav gestaltet. Die Integration in die Abreißschraube erfolgt auf eine Weise, dass das Endstück sich bei Erreichen eines bestimmten Drehmoments durch den herrschenden Anpressdruck nicht mehr auf dem Leiter mitdreht und diesen somit mechanisch entlastet. Das Endstück kann auf beide Seiten der miteinander verklebten Gewindeabschnitte, d. h., auf jede Seite der fertigen Abreißschraube, ohne die Notwendigkeit der Verwendung eines zusätzliches Werkzeug aufgesteckt und bei Bedarf auch verklebt werden. Das Endstück ist ferner derart ausgebildet, um bestimmte Sollbruchstellen mechanisch zu blockieren. Besonders vorteilhaft kann das Endstück hierzu die Funktion eines Sperrstifts für bestimmte Abreißstellen der Abreißschraube erfüllen, um das korrekte Ansprechen einzelner ausgewählter Sollbruchstellen zu ermöglichen.

Die miteinander verklebten Abschnitte bestehen vorzugsweise aus einem Metall, Kunststoff oder keramischem Material oder aus einer Komposition dieser Materialien.

Aus fertigungstechnischer Sicht hat sich, im Falle der Verwendung von Metall als Ausgangsmaterial, für die Herstellung der einzelnen Abschnitte, die miteinander verklebt werden, ein Strangprofilpressverfahren als vorteilhaft erwiesen.

Die signifikanten Vorteile und Merkmale der Erfindung gegenüber dem Stand der Technik sind im Wesentlichen:
■ die Klebverbindungen zwischen den einzelnen Abschnitten bilden jeweils Sollbruchstellen, die ein gratfreies Scheren sicherstellen,
■ Beabstandung zwischen den einzelnen Abschnitten ist durch Verwendung einer dünnen Filmklebeschicht nur minimal, wodurch keine Behinderung der Kraftübertragung im Gewinde durch raumgreifende Ausnehmungen entsteht,
■ optionale Platzierung eines Endstücks im Bereich des den elektrischen Leiter kontaktierenden Endes der Abreißschraube, wodurch die Adern oder Leiter hinsichtlich der auftretenden Reibung entlastet werden,
■ Materialschwächungen in Form von gefrästen Ausnehmungen über der Umfangslinie der Abreißschraube sind nicht vorhanden,
■ Herstellung der Elemente der Abreißschraube im Strangprofilpressverfahren und dadurch kostengünstig,
■ unterschiedliche Ausbildung der Abschnitte hinsichtlich ihrer Länge gewährleistet einen variablen Einsatz für verschiedene Leiterquerschnitte,
■ benachbarte Abschnitte können hinsichtlich ihrer Ausnehmung versetzt, beispielsweise in einem Winkel von 30°, miteinander verklebt werden, um ein Durchrutschen eines Antriebswerkzeugs zu verhindern,
■ einzelne Abschnitte können auch als Wegbegrenzung verwendet werden, indem sie mit einem gegenüber den benachbarten Abschnitten erhöhten Durchmesser ausgebildet werden und
■ sichere und problemlose Montage durch den Anwender.

Die Ziele und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, von denen zeigen:
- Fig. 1.1:: Abreißschraube mit äußeren Angriffsflächen aufweisendem Kopfabschnitt gemäß dem Stand der Technik,
- Fig. 1.2:: Abreißschraube mit inneren Angriffsflächen aufweisendem Kopfabschnitt gemäß dem Stand der Technik,
- Fig. 2.1:: erste Schnittdarstellung einer erfindungsgemäßen Abreißschraube in Form einer Abreißschraube mit inneren Angriffsflächen aufweisendem Kopfabschnitt in einer ersten Ausgestaltung,
- Fig. 2.2:: zweite Schnittdarstellung einer erfindungsgemäßen Abreißschraube in Form einer Abreißschraube mit inneren Angriffsflächen aufweisendem Kopfabschnitt in einer ersten Ausgestaltung,
- Fig. 3.1:: erste Schnittdarstellung einer Abreißschraube in einer zweiten Ausgestaltung mit einem eine Ausnehmung aufweisenden Kopfabschnitt und einem Gewindeabschnitt,
- Fig. 3.2:: zweite Schnittdarstellung einer Abreißschraube in einer zweiten Ausgestaltung mit einem eine Ausnehmung aufweisenden Kopfabschnitt und einem Gewindeabschnitt,
- Fig. 4.1:: Längsschnitt einer Abreißschraube in einer dritten Ausgestaltung mit einem äußere Angriffsflächen aufweisenden Kopfabschnitt und einem Gewindeabschnitt,
- Fig. 4.2:: Querschnitt einer Abreißschraube in einer dritten Ausgestaltung mit einem äußere Angriffsflächen aufweisenden Kopfabschnitt und einem Gewindeabschnitt,
- Fig. 5.1:: Längsschnitt einer Abreißschraube in einer vierten Ausgestaltung ohne Kopfabschnitt in einer ersten Darstellung,
- Fig. 5.2:: Längsschnitt einer Abreißschraube in einer vierten Ausgestaltung ohne Kopfabschnitt in einer zweiten Darstellung,
- Fig. 5.3: Schnittdarstellung einer Abreißschraube in einer fünften Ausgestaltung in einer ersten Darstellung,
- Fig. 5.4: Schnittdarstellung einer Abreißschraube in einer fünften Ausgestaltung in einer zweiten Darstellung,
- Fig. 6.1:: erste Darstellung eines Längsschnitts einer Abreißschraube in einer fünften Ausgestaltung unter Verwendung einer Zwischenlage im Bereich einer Klebeverbindung und
- Fig. 6.2:: zweite Darstellung eines Längsschnitts einer Abreißschraube in einer fünften Ausgestaltung unter Verwendung einer Zwischenlage im Bereich einer Klebeverbindung.

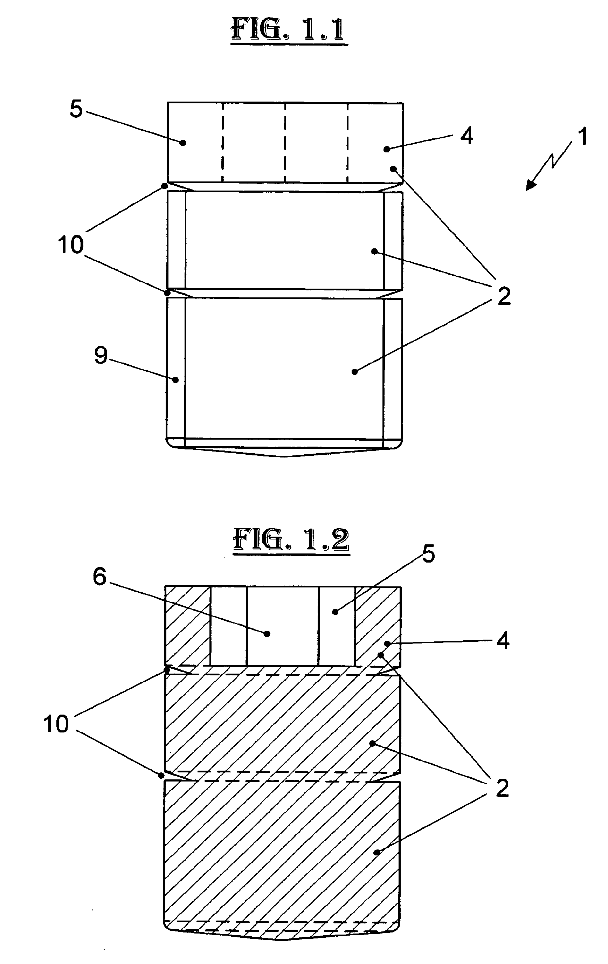

Die Figuren 1.1 und 1.2 illustrieren jeweils eine Abreißschraube 1 zur Anwendung in Klemmkörpern oder Klemmverbindern gemäß dem Stand der Technik; umfassend drei Abschnitte 2, von denen ein erster Abschnitt als Kopfabschnitt 4 mit äußeren Angriffsflächen 5 bzw. mit einer durch eine Ausnehmung 6 gebildeten inneren Angriffsflächen 5 und die übrigen beiden Abschnitte 2 jeweils als Gewindeabschnitt mit Außengewinde 9 ausgebildet sind. Die beiden Außengewinde 9 der Gewindeabschnitte 2 sind dabei komplementär zu einer nichtdargestellten Bohrung mit Innengewinde des nichtdargestellten Klemmkörpers oder Klemmverbinders. Wie ersichtlich, sind zwischen den einzelnen Abschnitten 2 üblicherweise gefräste Materialschwächungen zu verzeichnen, die als Sollbruchstellen bzw. Sollbruchabschnitte 10 ausgebildet sind. Beim Aufbringen einer definierten Kraft mittels eines am Außensechskant des Kopfabschnitts 4 angreifenden bzw. in die Ausnehmung 6 des Kopfabschnitts 4 eingreifenden Antriebswerkzeugs wird die Abreißschraube im Bereich einer der Sollbruchstellen bzw. Sollbruchabschnitte 10 geschert. Die Sollbruchstelle kann dabei auch außerhalb des Klemmkörpers oder Klemmverbinders liegen.

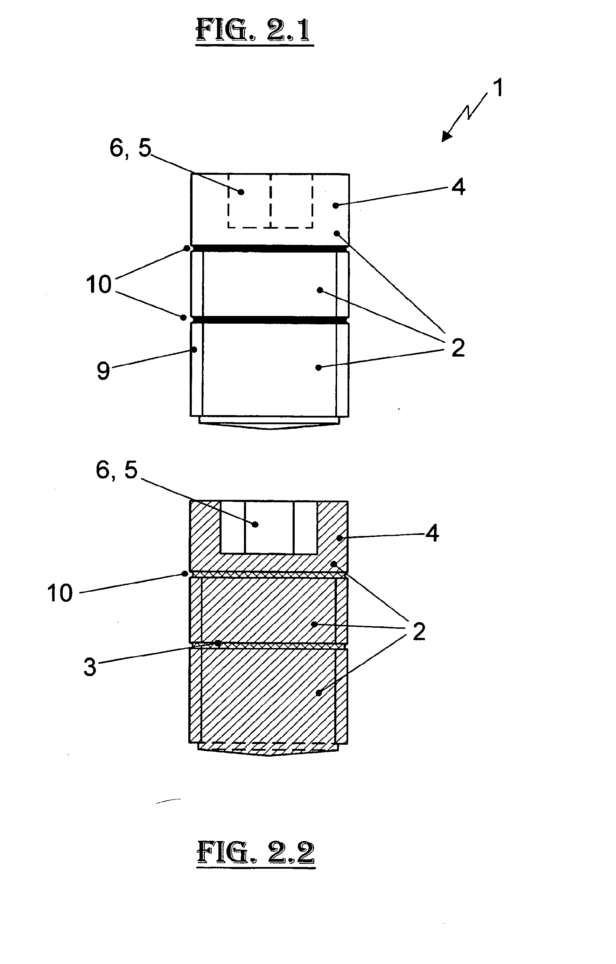

Die Figuren 2.1 und 2.2 zeigen jeweils eine Schnittdarstellung einer erfindungsgemäßen Abreißschraube 1 in einer ersten Ausgestaltung mit inneren Angriffsflächen 5 aufweisendem Kopfabschnitt 4. Die Abreißschraube umfasst ebenso wie die Abreißschraube gemäß der Fig. 1.2 drei Abschnitte 2, von denen ein Abschnitt 2 als Kopfabschnitt 4 mit Ausnehmung 6 und zwei weitere Abschnitte 2 als Gewindeabschnitt mit Außengewinde 9 ausgebildet sind. Erfindungsgemäß sind die jeweils benachbarten Abschnitte 2 im Bereich ihrer Stirnflächen 3 miteinander verklebt. Der dazu verwendete elastische Kleber oder das Klebstoffgemisch erstreckt sich nahezu über die gesamte Stirnfläche 3 der Abschnitte 2, sodass keine Materialschwächung über der Umfangslinie der Abschnitte 2 der Abreißschraube zu verzeichnen ist. Das Aufbringen des Außengewindes 9 auf zwei der Abschnitte 2 erfolgt im Nachgang des Verklebens aller Abschnitte 2 miteinander.

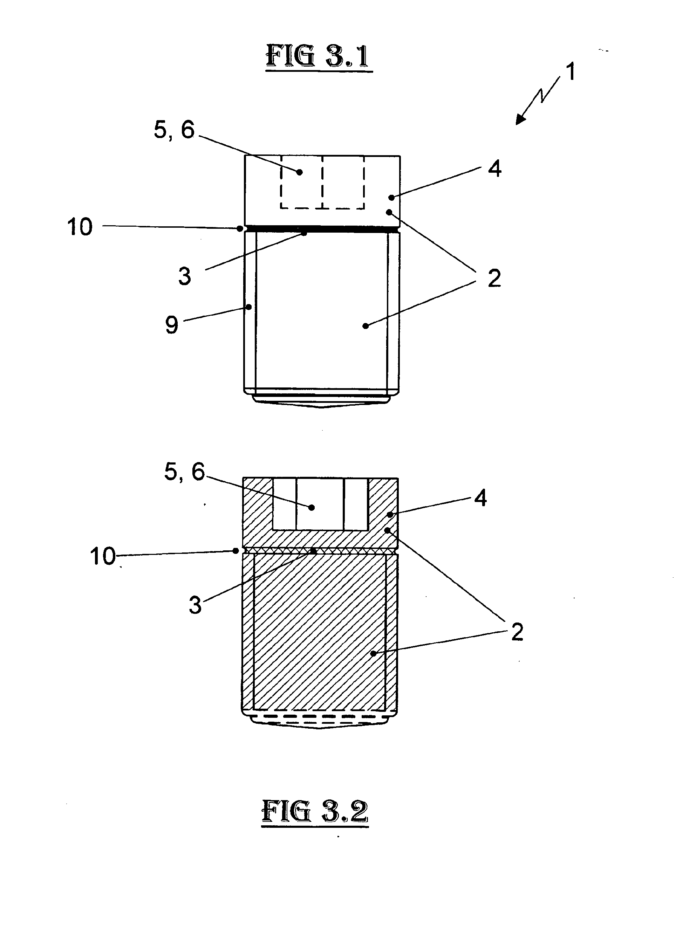

Die Figuren 3.1 und 3.2 zeigen jeweils eine Schnittdarstellung einer Abreißschraube in einer zweiten Ausgestaltung mit einem eine Ausnehmung 6 aufweisenden Kopfabschnitt 4 sowie einem Abschnitt 2 mit Außengewinde 9. Der mit dem Kopfabschnitt 4 verklebte Gewindeabschnitt 2 kann auf einfache Weise kostengünstig aus einem Strangprofil hergestellt werden. Das Aufbringen des Außengewindes 9 erfolgt nach dem Verkleben mit dem Kopfabschnitt 4. Gemäß der Figuren 3.1 und 3.2 umfasst der Kopfabschnitt 4 eine Ausnehmung 6 in Form eines Innensechskants, in welches ein Antriebswerkzeug eingreift. Der Kopfabschnitt 4 kann ebenso vorteilhaft aus Strangprofil hergestellt werden. Weitere Gewindeabschnitte können wiederum mit dem Ende des ersten Gewindeabschnitts per Klebeverbindung verbunden werden. Die Klebestellen bilden die erwähnten Sollbruchstellen bzw. Sollbruchabschnitte 10 der Abreißschraube 1.

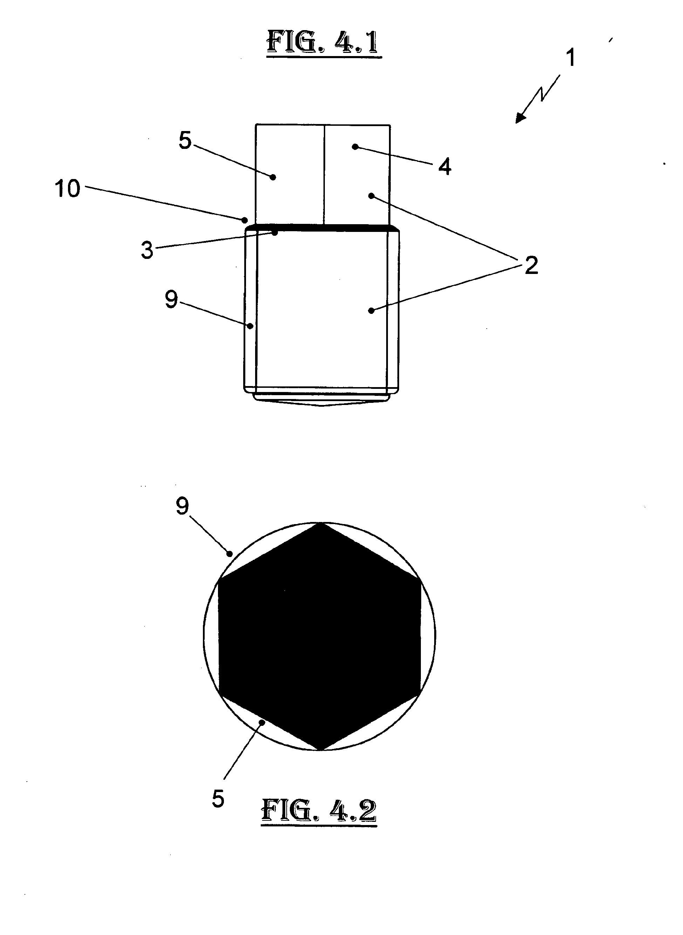

Die Figuren 4.1 und 4.2 zeigen einen Längsschnitt und einen Querschnitt einer Abreißschraube in einer dritten Ausgestaltung mit einem Kopfabschnitt 4 sowie einem weiteren als Gewindeabschnitt ausgebildeten Abschnitt 2, wobei der Kopfabschnitt 4 äußere Angriffsflächen 5 für ein Antriebswerkzeug aufweist. Der grundsätzliche Aufbau der erfindungsgemäßen Abreißschraube entspricht jedoch der Abreißschraube gemäß der Figuren 3.1 und 3.2.

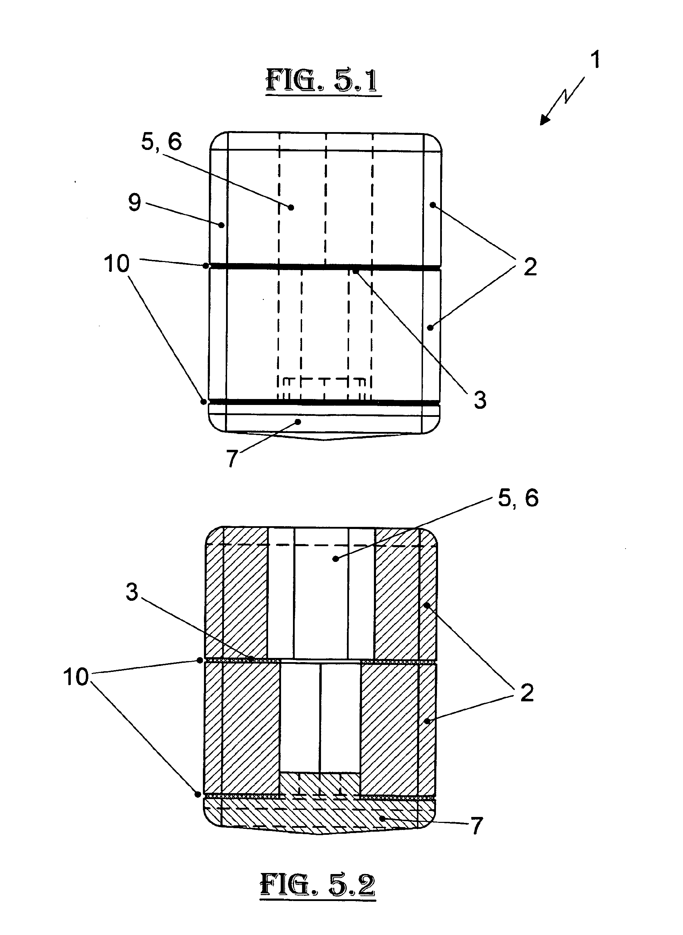

Die Figuren 5.1 und 5.2 zeigen jeweils einen Längsschnitt einer Abreißschraube 1 in einer vierten Ausgestaltung ohne separaten Kopfabschnitt 4. Die Abreißschraube 1 umfasst hierbei zwei Gewindeabschnitte von gleicher Länge sowie ein Endstück 7. Das im Bereich des den elektrischen Leiter kontaktierenden Endes der Abreißschraube 1 platzierte Endstück 7 umfasst zwei Seiten, dessen eine Seite auf dem elektrischen Leiter aufsitzt und dessen gegenüberliegende Seite komplementär in den benachbarten Gewindeabschnitt der Abreißschraube 1 eingreift. Diese auf dem elektrischen Leiter aufsitzende Kontaktfläche des Endstücks 7 ist im dargestellten Beispiel konkav ausgebildet.

Die einzelnen Gewindeabschnitte können vorteilhaft aus einem Strangprofil gefertigt werden, wodurch die Produktionskosten durch den verringerten technischen sowie zeitlichen Aufwand deutlich stark herabgesetzt werden können. Das Strangprofil ist besonders vorteilhaft mit einer Ausnehmung 6 für die Aufnahme eines geeigneten Antriebswerkzeugs, beispielsweise einem Sechskant-Werkzeug, ausgestattet. Die beiden Gewindeabschnitte sind an ihren Stirnflächen 3 miteinander verklebt, wobei erfindungsgemäß diese Klebestelle der Sollbruchstelle bzw. dem Sollbruchabschnitt 10 der Abreißschraube entspricht. Um ein Durchrutschen des Antriebswerkzeugs beim Eingriff in den oberen Gewindeabschnitt in den zweiten Gewindeabschnitt zu vermeiden, können die beiden Gewindeabschnitte beim Verkleben in einem bestimmten Winkel zueinander versetzt werden, z. B. in einem Winkel 30°. Somit wird, aufgrund der inneren Formgestaltung für das Antriebswerkzeug, dessen Durchrutschen und damit eine Blockade des Sollbruchabschnitts 10 vermieden. Durch die gezielte Auswahl bestimmter Längen der Gewindeabschnitte kann die Bandbreite der Verwendung der Abreißschraube für unterschiedliche Leiterquerschnitte variiert werden. Werden die Gewindeabschnitte in ihrer Länge unterschiedlich ausgebildet, so kann die Abreißschraube mit jeder Seite unterschiedliche Querschnittsbereiche abdecken. Eine zu breite Querschnittsüberdeckung, beispielsweise zur Überdeckung von acht Nenn-Leiterquerschnitten, ist unerwünscht und aus ökonomischer Sicht bedenklich. Jede Seite der Abreißschraube kann vorteilhaft mit einem einzigen Antriebswerkzeug montiert werden. Ein Wechsel des Antriebswerkzeugs oder die Verwendung weiterer Hilfsmittel ist nicht notwendig. Das Abreißmoment wird so eingestellt, dass ein für die technische Zuverlässigkeit befriedigender, jedoch nicht zu hoher Anpressdruck auf den Kabelleiter ausgeübt wird. Durch das innen angreifende Antriebswerkzeug wird eine ökonomisch und ökologisch vorteilhafte Funktionsintegration erreicht, indem ein separates Antriebsteil entfällt. Dadurch verringert sich der Materialverlust nach der Montage, es ist nur das überschüssige Funktionsteil zu entsorgen; jedoch kein zusätzliches Antriebsteil bzw. Kopfabschnitt 4.

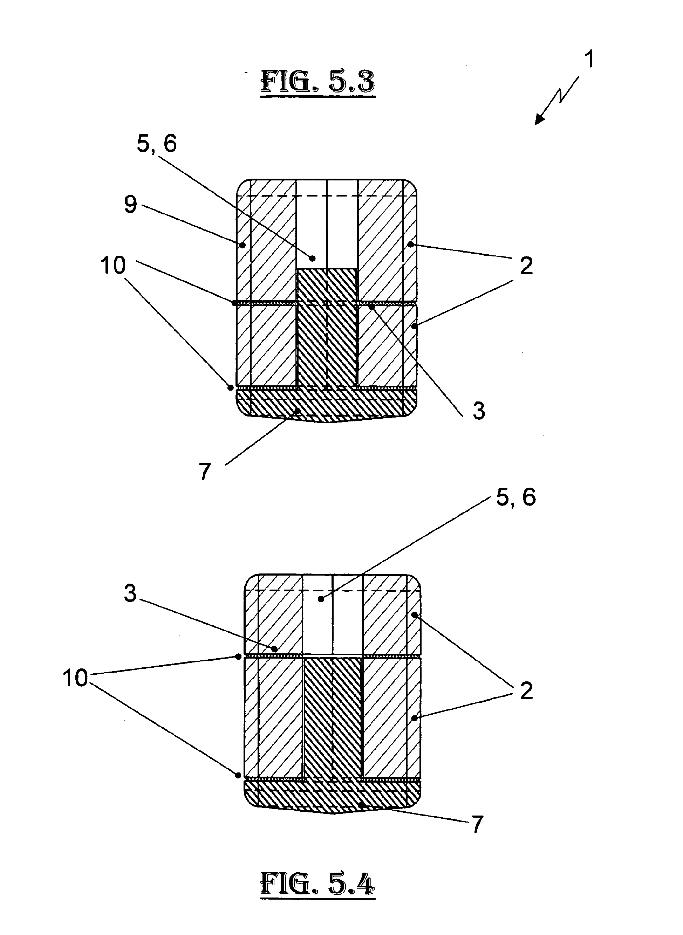

Die Figuren 5.3 und 5.4 zeigen jeweils eine Schnittdarstellung einer Abreißschraube 1 in einer fünften Ausgestaltung äquivalent zu den Figuren 5.1 bzw 5.2. Hierbei sind die Gewindeabschnitte jedoch nicht voneinander versetzt angeordnet, sodass die innen gebildeten Angriffsflächen 5 gleichmäßig durch die Gewindeabschnitte verlaufen. Hierbei ist das am Ende der Abreißschraube 1 platzierte Endstück 7 mit einem verlängerten Fortsatz ausgestattet, der es ermöglicht, für bestimmte Anwendungsfälle den Sollbruchabschnitt 10 zu blockieren und somit ein Abscheren der Abreißschraube 1 an dieser Stelle zu vermeiden bzw. bei einer Abreißschraube 1 mit mehreren Stufen das Abscheren gezielt an einer bestimmten Stufe herbeizuführen.

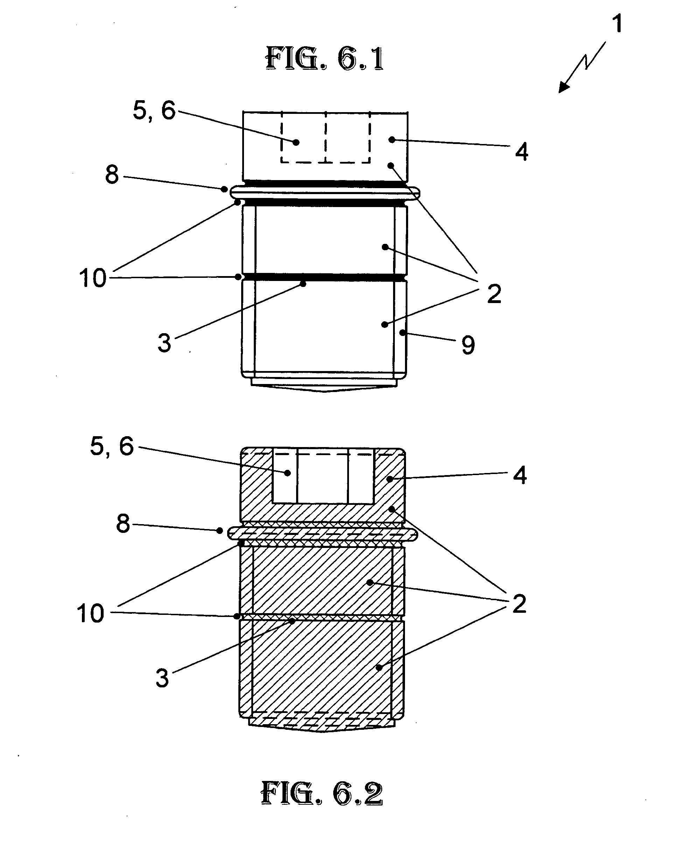

Die Figuren 6.1 und 6.2 illustrieren jeweils die Darstellung eines Längsschnitts einer Abreißschraube 1 in einer sechsten Ausgestaltung unter Verwendung einer scheibenartigen Zwischenlage 8 im Bereich der Sollbruchabschnitt 10 ausgebildeten Klebeverbindung. Die Abreißschraube 1 umfasst im dargestellten Beispiel zwei Gewindeabschnitte und einen Kopfabschnitt 4 mit inneren Angriffsflächen 5 für ein Antriebswerkzeug. Alle Abschnitte 2 sind wiederum an ihren Stirnflächen 3 erfindungsgemäß miteinander verklebt. Im Bereich der zwischen dem Kopfabschnitt 4 und dem sich daran anschließenden Gewindeabschnitt ausgebildeten Klebeverbindung ist zusätzlich eine als Wegbegrenzungs-Scheibe 8 mit gegenüber den benachbarten Abschnitten erhöhten Durchmesser ausgebildete Zwischenlage 8 platziert, auf die die Stirnflächen 3 der beiden Abschnitte 2 beidseitig aufgeklebt werden. Die Wegbegrenzungs-Scheibe 8 bildet einen Anschlag am Verbindungselement und dient somit als weggesteuerte Abreißstelle. Zudem lässt sich durch eine derartige Wegbegrenzungs-Scheibe 8 auch eine Flächenvergrößerung der Klebefläche erreichen, wenn es beispielsweise notwendig sein sollte, aus technischen Gründen das Drehmoment dieser Abreißstelle gegenüber den anderen Abreißstellen signifikant zu erhöhen.

### LISTE DER BEZUGSZEICHEN

- 1: Abreißschraube
- 2: Abschnitt
- 3: Stirnflächen
- 4: Kopfabschnitt
- 5: Angriffsflächen
- 6: Ausnehmung
- 7: Endstück
- 8: Wegbegrenzungs-Scheibe, Zwischenlage
- 9: Außengewinde
- 10: Sollbruchabschnitt

## Patentansprüche

1. Abreißschraube (1) für Verbindungselemente von elektrischen Leitern, beispielsweise Klemmkörper oder Klemmverbinder, umfassend zumindest zwei sich in Richtung der Längsachse der Abreißschraube (1) sich erstreckende zylinderartige Abschnitte (2), die durch einen Sollbruchabschnitt (10) voneinander abgegrenzt sind, **dadurch gekennzeichnet, dass** die einzelnen Abschnitte (2) an ihren Stirnflächen (3) jeweils mittels einer Klebverbindung miteinander verbunden sind, wobei die Klebverbindung als der eine Scherebene bildende Sollbruchabschnitt (10) der Abreißschraube (1) ausgebildet ist.

2. Abreißschraube (1) nach Anspruch 1, **dadurch gekennzeichnet, dass** die Klebverbindung mittels eines Klebers oder eines Klebstoffgemischs herstellbar ist, der oder das elastische Eigenschaften aufweist.

3. Abreißschraube (1) nach Anspruch 1 oder 2, **dadurch gekennzeichnet, dass** die verklebten Stirnflächen (3) der Abschnitte (2) zumindest partiell mit einer Antihaftbeschichtung versehen sind.

4. Abreißschraube (1) nach einem der Ansprüche 1 bis 3, **dadurch gekennzeichnet, dass** zwischen die verklebten Stirnflächen (3) der Abschnitte (2) eine die Stirnflächen (3) zumindest partiell abdeckende Folie eingelegt wird.

5. Abreißschraube (1) nach einem der Ansprüche 1 bis 4, **dadurch gekennzeichnet, dass** zumindest einer der Abschnitte (2) ein Außengewinde aufweist, welches passfähig zu einem Innengewinde des Klemmkörpers oder Klemmverbinders ausgebildet ist.

6. Abreißschraube (1) nach einem der Ansprüche 1 bis 5, **dadurch gekennzeichnet, dass** einer der axialen Endabschnitte der Abreißschraube (1) als Kopfabschnitt (4) ausgebildet ist, welcher Angriffsflächen (5) für ein Antriebswerkzeug aufweist.

7. Abreißschraube (1) nach Anspruch 6, **dadurch gekennzeichnet, dass** der Kopfabschnitt (4) auf seiner Außenfläche Angriffsflächen (5) für das Antriebswerkzeug aufweist.

8. Abreißschraube (1) nach Anspruch 6, **dadurch gekennzeichnet, dass** der Kopfabschnitt (4) zur Bildung von Innenflächen eine Ausnehmung umfasst, die Angriffsflächen (5) für das Antriebswerkzeug aufweist.

9. Abreißschraube (1) nach einem der Ansprüche 1 bis 8, **dadurch gekennzeichnet, dass** das Abschermoment der einzelnen Sollbruchabschnitte (10) bzw. Klebverbindungen ausgehend vom Kopfabschnitt (4) bis hin zum gegenüberliegenden axialen Ende der Abreißschraube (1) zunimmt, abnimmt oder konstant ist.

10. Abreißschraube (1) nach einem der Ansprüche 1 bis 9, **dadurch gekennzeichnet, dass** die miteinander verklebten Stirnflächen (3) der einzelnen Abschnitte (2) zum Zwecke einer optimalen Einstellung des Abreißdrehmoments eine kegelförmige Form aufweisen.

11. Abreißschraube (1) nach einem der Ansprüche 1 bis 10, **dadurch gekennzeichnet, dass** die miteinander verklebten Stirnflächen (3) der einzelnen Abschnitte (2) zum Zwecke einer optimalen Einstellung des Abreißdrehmoments eine halbrunde Form aufweisen.

12. Abreißschraube (1) nach Anspruch 1 bis 11, **dadurch gekennzeichnet, dass** die miteinander verklebten Stirnflächen (3) der einzelnen Abschnitte (2) zum Zwecke einer optimalen Einstellung des Abreißdrehmoments eine zylindrische Tonnenform aufweisen.

13. Abreißschraube (1) nach Anspruch 1 bis 12, **dadurch gekennzeichnet, dass** die Länge der einzelnen Abschnitte (2) unterschiedlich ist.

14. Abreißschraube (1) nach einem der Ansprüche 1 bis 13, **dadurch gekennzeichnet, dass** im Bereich des den elektrischen Leiter kontaktierenden Endes der Abreißschraube (1) ein Endstück (7) platziert ist, dessen eine Seite auf dem elektrischen Leiter aufsitzt und dessen gegenüberliegende Seite komplementär in den benachbarten Abschnitt (2) der Abreißschraube (1) eingreift und derart ausgebildet ist, bestimmte Sollbruchstellen mechanisch zu blockieren.

15. Abreißschraube (1) nach einem der Ansprüche 1 bis 14, **dadurch gekennzeichnet, dass** die auf dem elektrischen Leiter aufsitzende Kontaktfläche des Endstücks (7) konkav ausgebildet ist.

16. Abreißschraube (1) nach Anspruch 1 bis 15, **dadurch gekennzeichnet, dass** die einzelnen Abschnitte (2) aus einem Metall, Kunststoff oder keramischem Material oder aus einer Komposition dieser Materialien bestehen.

17. Abreißschraube (1) nach Anspruch 1 bis 16, **dadurch gekennzeichnet, dass** die einzelnen Abschnitte (2) durch ein Strangprofilpressverfahren herstellbar sind.

## Claims

1. Twist-off screw (1) for connection elements of electric conductors, such as clamping bodies or clamping connectors, comprising at least two cylinder-type sections (2) extending in direction of the longitudinal axis of the twist-off screw (1), the sections (2) delimited from each other by a predetermined breaking section (10), **characterized by** that the individual sections (2) each are connected one to another at their faces (3) through an adhesive-bonded joint, with the adhesive-bonded joint established as the predetermined breaking section (10) of the twist-off screw (1), the predetermined breaking section (10) forming a shear plane.

2. Twist-off screw (1) to claim 1 **characterized by** that the adhesive-bonded joint is manufacturable using an adhesive or a mixture of adhesives, respectively, having elastic properties.

3. Twist-off screw (1) to claim 1 or 2 **characterized by** that the bonded faces (3) of the sections (2) are provided, at least partially, with an anti-stick coating.

4. Twist-off screw (1) to any of the claims 1 to 3 **characterized by** that a foil is inserted between the bonded faces (3) of the sections (2) that at least partially covers the faces (3).

5. Twist-off screw (1) to any of the claims 1 to 4 **characterized by** that at least one of the sections (2) is provided with an external thread that is established to fit to an internal thread of the clamping body or clamping connector.

6. Twist-off screw (1) to any of the claims 1 to 5 **characterized by** that one of the axial end sections of the twist-off screw (1) is established as head section (4), provided with working surfaces (5) for a driving tool.

7. Twist-off screw (1) to claim 6 **characterized by** that the head section (4) at its external surface is provided with working surfaces (5) for the driving tool.

8. Twist-off screw (1) to claim 6 **characterized by** that, in order to form internal surfaces the head section (4) comprises a recess provided with working surfaces (5) for the driving tool.

9. Twist-off screw (1) to any of the claims 1 to 8 **characterized by** that the twist moment of the individual predetermined breaking sections (10), or adhesive-bonded joints, respectively, increases, decreases or is constant starting at the head section (4) up to the opposite axial end of the twist-off screw (1).

10. Twist-off screw (1) to any of the claims 1 to 9 **characterized by** that the bonded faces (3) of the individual sections (2) are provided with a tapered shape in order to enable optimal adjustment of the twist-off moment.

11. Twist-off screw (1) to any of the claims 1 to 10 **characterized by** that the bonded faces (3) of the individual sections (2) are provided with a semispherical shape in order to enable optimal adjustment of the twist-off moment.

12. Twist-off screw (1) to claims 1 to 11 **characterized by** that the bonded faces (3) of the individual sections (2) are provided with a cylindrical barrel shape in order to enable optimal adjustment of the twist-off moment.

13. Twist-off screw (1) to claims 1 to 12 **characterized by** that the lengths of the individual sections (2) are different.

14. Twist-off screw (1) to any of the claims 1 to 13 **characterized by** that in the area of the end, contacting the electric conductor, of the twist-off screw (1) an end piece (7) is placed the one side of which seats on the electric conductor and the opposite side of which complementarily engages with the adjacent section (2) of the twist-off screw (1) and is established in a way to mechanically block certain predetermined breaking sections.

15. Twist-off screw (1) to any of the claims 1 to 14 **characterized by** that the contact surface, that seats on the electric conductor, of the end piece (7) is established concave.

16. Twist-off screw (1) to claims 1 to 15 **characterized by** that the individual sections (2) are made of a metal, plastic or ceramic material, or of a composition of these materials.

17. Twist-off screw (1) to claims 1 to 16 **characterized by** that the individual sections (2) are manufacturable by an extrusion molding process.

## Revendications

1. Vis de rupture (1) pour éléments de connexion de conducteurs électriques, tels que les éléments ou raccords de serrage, comprenant au moins deux sections de forme cylindrique (2) s'étendant dans le sens de l'axe longitudinal de la vis de rupture (1) et séparées l'une de l'autre par une section de rupture (10), **caractérisée en ce que** chacune de ces sections (2) est individuellement reliée à l'autre sur sa surface frontale (3) au moyen d'un raccord collé, ce raccord étant constitué comme une zone de rupture formant la section de rupture (10) de la vis de rupture (1).

2. Vis de rupture (1) selon la revendication 1, **caractérisée en ce que** le raccord collé peut être façonné au moyen d'une colle ou d'un mélange de colles qui présente des caractéristiques élastiques.

3. Vis de rupture (1) selon la revendication 1 ou 2, **caractérisée en ce que** les surfaces frontales (3) collées des sections (2) sont au moins partiellement pourvues d'une couche anti-adhésive.

4. Vis de rupture (1) selon l'une des revendications 1 à 3, **caractérisée en ce que**, entre les surfaces frontales (3) collées des sections (2), est intégrée une feuille recouvrant au moins partiellement les surfaces frontales (3).

5. Vis de rupture (1) selon l'une des revendications 1 à 4, **caractérisée en ce qu'**au moins l'une des sections (2) est pourvue d'un filet extérieur correspondant à un filet intérieur de l'élément ou du raccord de serrage.

6. Vis de rupture (1) selon l'une des revendications 1 à 5, **caractérisée en ce que** l'une des extrémités de la vis de rupture (1) est façonnée en section de tête (4) présentant une surface d'agrippage (5) pour un outil d'entraînement.

7. Vis de rupture (1) selon la revendication 6, **caractérisée en ce que** la section de tête (4) présente sur sa surface externe (5) des zones d'agrippage pour l'outil d'entraînement.

8. Vis de rupture (1) selon la revendication 6, **caractérisée en ce que** la section de tête (4) présente un évidement pour former des surfaces internes qui présente des surfaces d'agrippage (5) pour l'outil d'entraînement.

9. Vis de rupture (1) selon l'une des revendications 1 à 8, **caractérisée en ce que** le moment de rupture de chaque section de rupture (10) ou des raccords collés partant de la section de tête (4) jusqu'à l'extrémité axiale opposée de la vis de rupture (1) s'accroît, diminue ou reste constant.

10. Vis de rupture (1) selon l'une des revendications 1 à 9, **caractérisée en ce que** les surfaces frontales (3) collées entre elles de chaque section (2) présentent une forme conique permettant de régler de manière optimale le couple d'arrachage.

11. Vis de rupture (1) selon l'une des revendications 1 à 10, **caractérisée en ce que** les surfaces frontales (3) collées entre elles de chaque section (2) présentent une forme semi-cylindrique permettant de régler de manière optimale le couple d'arrachage.

12. Vis de rupture (1) selon l'une des revendications 1 à 11, **caractérisée en ce que** les surfaces frontales (3) collées entre elles de chaque section (2) présentent une forme de tonneau cylindrique permettant de régler de manière optimale le couple d'arrachage.

13. Vis de rupture (1) selon l'une des revendications 1 à 12, **caractérisée en ce que** la longueur des sections (2) individuelles est différente.

14. Vis de rupture (1) selon l'une des revendications 1 à 13, **caractérisée en ce que** dans la zone de l'extrémité de la vis de rupture (1) contactant le conducteur électrique est placée une extrémité arrière (7) dont l'un des côtés repose sur le conducteur électrique et dont le côté opposé s'engrène de manière complémentaire dans la section voisine (2) de la vis de rupture (1) et est conçu de manière à bloquer certains points de rupture de façon mécanique.

15. Vis de rupture (1) selon l'une des revendications 1 à 14, **caractérisée en ce que** la surface de contact à cheval sur le conducteur électrique de l'extrémité arrière (7) est conçue de manière concave.

16. Vis de rupture (1) selon l'une des revendications 1 à 15, **caractérisée en ce que** les diverses sections (2) se composent d'un métal, de plastique, d'un matériau céramique, ou encore d'un mélange de ces matériaux.

17. Vis de rupture (1) selon l'une des revendications 1 à 16, **caractérisée en ce que** les diverses sections (2) peuvent être fabriquées selon un procédé de pressage de profilés par extrusion.
